# EUROPÄISCHE PATENTSCHRIFT

(11) **EP 2 189 337 B1**
(45) Veröffentlichungstag und Bekanntmachung des Hinweises auf die Patenterteilung: **15.02.2012**
(21) Anmeldenummer: 09012836.4
(22) Anmeldetag: 10.10.2009
(51) Int. Cl.: B60R 22/20, B60R 22/195, B60R 22/02, B60R 22/18

(54) **Sicherheitsvorrichtung für Kraftfahrzeuge**
Safety device for vehicles
Dispositif de sécurité pour véhicules

(30) Priorität: 13.11.2008 DE 102008057126
(43) Veröffentlichungstag der Anmeldung: 26.05.2010
(73) Patentinhaber: VOLKSWAGEN AG, 38436 Wolfsburg (DE)
(72) Erfinder: Grutzeck, Stefan, 38102 Braunschweig (DE)

(56) Entgegenhaltungen:
- EP-A- 0 716 963
- EP-A- 1 580 089
- DE-A1- 3 539 051

## Beschreibung

Die vorliegende Erfindung bezieht sich auf eine Sicherheitsvorrichtung für Kraftfahrzeuge, insbesondere für zweitürige Personenkraftfahrzeuge, gemäß dem Oberbegriff des Patentanspruches 1.

Bei derartigen Sicherheitsvorrichtungen ist es geläufiger Stand der Technik, den jeweils äußeren Gurtbeschlag oder die Gurtanlenkung des Beckengurtabschnittes des Sicherheitsgurtes verstellbar auszubilden, um den Einstieg einer Mitfahrperson in den Fondbereich des Kraftfahrzeuges zu erleichtern. Dabei bedient man sich häufig mittels eines am Schweller der Karosserie des Kraftfahrzeuges fest angeordneten Gleitbügels, der in Fahrzeuglängsrichtung verläuft und dessen vorderes Ende den Gurtverankerungspunkt definiert, während in der Einstiegsposition die Halteschlaufe des Beckengurtabschnittes nach hinten gleiten kann und den Türausschnitt freigibt.

Aus der EP 1 270 345 B1 ist es auch bekannt, die Wirksamkeit der Sicherheitsvorrichtung dadurch zu erhöhen, dass sowohl der Schultergurtabschnitt als auch der Beckengurtabschnitt mit Gurtstraffem versehen sind, die in einem Crashfall pyrotechnisch den jeweiligen Gurtabschnitt zusätzlich strammen. Der Gurtstraffer für den Beckengurtabschnitt ist dabei an der B-Säule der Karosserie angeordnet, wobei der Beckengurtabschnitt zur Erzielung eines unbehinderten Einstiegs in den Fondbereich des Kraftfahrzeuges durch den besagten Gleitbügel hindurchgeführt ist und dadurch beim Abgurten auf dem Gleitbügel nach hinten in die Einstiegsposition gleiten kann.

Aus der EP 1580089A bzw. DE 3539051A ist eine Vorrichtung gemäß den Oberbegriff des Anspruchs 1 bekannt.

Aufgabe der Erfindung ist es, bei einer Sicherheitsvorrichtung der gattungsgemäßen Art mit einem Gurtstraffer am Beckengurtabschnitt Maßnahmen vorzuschlagen, mittels denen bei einem unbehinderten Einstieg in der Ruheposition des Beckengurtabschnittes eine optimale Betriebsposition mit verbesserter Becken-Rückhaltung der angegurteten Person am Vordersitz erzielbar ist.

Erfindungsgemäß wird diese Aufgabe mit den Merkmalen des Patentanspruches 1 gelöst. Vorteilhafte und besonders zweckmäßige Weiterbildungen der Erfindung sind in den Unteransprüchen angeführt.

Erfindungsgemäß wird vorgeschlagen, dass der Gurtstraffer unmittelbar mit dem Gleitbügel gekoppelt ist und im Crashfalle den Gleitbügel nach hinten verlagert und dass ein vom Gleitbügel getrennter Haltebügel vorgesehen ist, der bei einer crashbedingten Verlagerung des Gleitbügels am Beckengurtabschnitt angreift und diesen durch entsprechende Umlenkung in der vorderen Verankerungsposition hält. Daraus resultiert eine vereinfachte Konstruktion mit einem konstanten Gurtverankerungspunkt, der auch bei aktiviertem Gurtstraffer eine definierte, vorgegebene Position beibehält und nicht nach hinten wandert. Dadurch wird ein in der Betriebsposition in der Seitenansicht gesehen steilerer Gurtverlauf des Beckengurtabschnittes beibehalten, der ein sogenanntes submarining der angegurteten Person zuverlässig ausschließt und zwar unabhängig davon, ob die Person besonders groß oder klein ist und der Vordersitz demgemäß mehr oder weniger weit nach vorne dem Lenkrad und den Bedienungspedalen zu eingestellt ist. Ferner ist sichergestellt, dass die Gurtlage stets in einem vorgeschriebenen Bereich (Anstellwinkel) liegt und dennoch ein unbehindertes Einsteigen in den Fonds des Kraftfahrzeuges gegeben ist.

In baulich einfacher, den Einstiegskomfort nicht beeinträchtiger Weise kann der Haltebügel oberhalb der Halteschlaufe des Beckengurtabschnittes am Gleitbügel den in Fahrzeuglängsrichtung verlaufenden Gleitbügel queren und eine nach vorne ausgerichtete Haltenase aufweisen. Dies stellt eine einfache und dennoch sichere Verankerung des Beckengurtabschnittes dar. In einer einfachsten Ausführung kann der Beckengurtabschnitt an dem Haltebügel manuell eingehängt werden und hält den Beckengurt solange in der vorderen Betriebsposition, bis eine Mitfahrperson in den Fond des Kraftfahrzeuges einsteigen will. Dazu kann dann der Beckengurt aus dem Haltebügel gelöst werden und entsprechend auf dem Gleitbügel nach hinten auswandern.

Bevorzugt kann der Haltebügel unterhalb des Gleitbügels am Schweller befestigt oder angelenkt sein. Eine gelenkige Verbindung eröffnet die Möglichkeit, den Haltebügel automatisiert an gegebene Betriebszustände anzupassen.

Des weiteren kann der Gleitbügel in zumindest einer am Schweller angeordneten Längsführung geführt sein, wobei an dem den Verankerungspunkt gegenüberliegenden Ende des Gleitbügels der am Schweller im Bereich der B-Säule der Karosserie angeordnete Gurtstraffer ortsfest positioniert ist. Damit können in fertigungstechnisch günstiger Weise der Gleitbügel mit dem Gurtstraffer am Schweller befestigt sein, bevorzugt hinter einer entsprechenden Verkleidung.

Der Haltebügel kann in besonders vorteilhafter Weise am Schweller befestigt und derart ausgeführt sein, dass der Beckengurtabschnitt beim Anlegen des Sicherheitsgurtes den hakenförmigen Abschnitt des Haltebügels überfahren kann und im angegurteten Zustand von dem Abschnitt gehalten ist. Damit wird in funktionell besonders einfacher Weise sichergestellt, dass mit jedem Anlegen des Sicherheitsgurtes der Person am Vordersitz auch der Haltebügel in die Betriebsposition gleiten kann.

Der Haltebügel kann alternativ jedoch schwenkbar am Schweller angelenkt und in einer den Beckengurtabschnitt nicht beaufschlagenden Position gehalten sein, wobei er zumindest in einem Crashfalle in die Funktionsstellung verlagerbar ist. Diese Version hält den Haltebügel solange außer Funktion, als keine Notwendigkeit einer Abstützfunktion bzw. eines konstanten Gurtverankerungspunktes vorliegt. Erst im Crashfall mit aktiviertem Gurtstraffer wird auch der Haltebügel in seine Abstützposition verschwenkt.

Dabei kann in einer ersten Ausführungsform der schwenkbare Haltebügel mittels einer pyrotechnischen Einrichtung im Crashfall in die Funktionsstellung verschwenkt werden.

Alternativ dazu kann der schwenkbare Haltebügel elektromotorisch zumindest in einem Crashfall in die Funktionsstellung verschwenkt werden. Eine elektrische Betätigung des Haltebügels ermöglicht aber insbesondere die weitere Funktion, dass der Haltebügel den Beckengurtabschnitt solange in der vorderen Betriebsposition hält, als keine Mitfahrperson in den Fond des Kraftfahrzeuges einsteigt. Dies erleichtert das Gurtanlegen am Vordersitz. Wird hingegen beispielsweise die Rückenlehne des betreffenden Vordersitzes vorgeklappt, so wird elektrisch gesteuert auch der Haltebügel zurückgeschwenkt und ist funktionslos. Der Beckengurt kann somit auf dem Gleitbügel in die Ruheposition nach hinten gleiten.

Schließlich kann in einer weiteren, vorteilhaften Ausgestaltung der Erfindung der schwenkbare Haltebügel mechanisch mit dem Gleitbügel derart gekoppelt sein, dass bei einer crashbedingten Verlagerung des Gleitbügels mittels des Gurtstraffers der federnd vorgespannte Haltebügel in die Funktionsstellung verschwenkt wird.

Ein Ausführungsbeispiel der Erfindung ist im folgenden anhand der schematischen Zeichnung näher erläutert. Es zeigen:
- Fig. 1: in einer Seitenansicht eine Sicherheitsvorrichtung mit einem 3-Punkt-Sicherheitsgurt, dessen äußerer Verankerungspunkt des Beckengurtabschnittes durch einen über einen Gurtstraffer verlagerbaren Gleitbügel und einen Haltebügel definiert ist;
- Fig. 2: eine Ansicht von schräg oben auf den Gleitbügel und den Haltebügel und den in eine Betriebsposition und eine Einstiegsposition überführbaren Beckengurtabschnitt;
- Fig. 3: eine Seitenansicht des Gleitbügels und des Haltebügels gemäß den Fig. 1 und 2; und
- Fig. 4: eine Ansicht von hinten auf den Gleitbügel und den Haltebügel gemäß den Fig. 1 bis 3 und deren Anbindung an den Schweller der Karosserie des Kraftfahrzeuges.

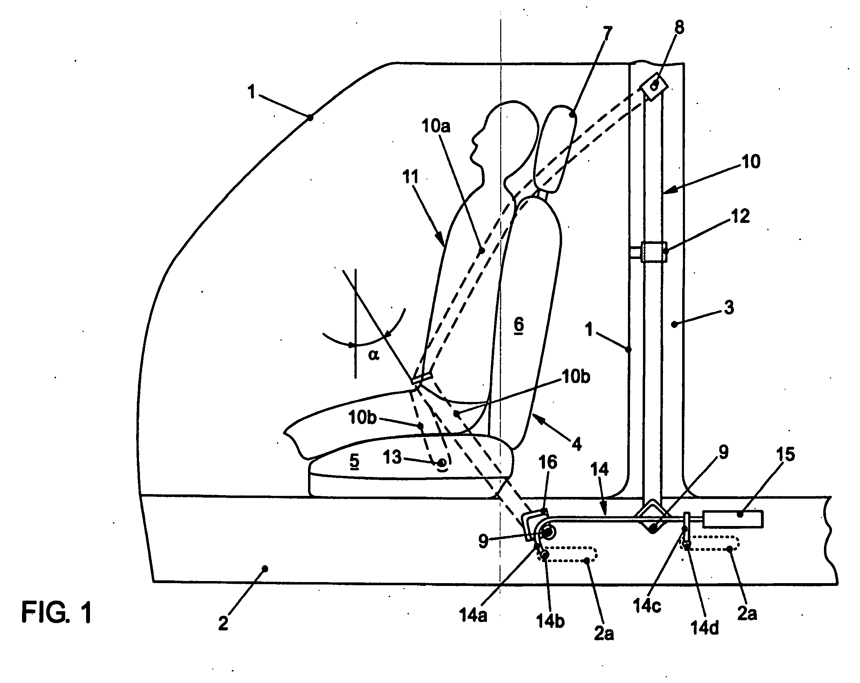

In der Fig. 1 ist übersichtsweise der Türausschnitt 1 eines zweitürigen Personenkraftfahrzeuges (eine ggf. vorhandene Hecktüre nicht eingerechnet) dargestellt, der in bekannter Weise durch angrenzende Karosseriebauteile begrenzt ist. Die untere Begrenzung bildet der teilweise eingezeichnete Schweller 2, während die hinten liegende, etwa senkrechte Begrenzung durch eine B-Säule 3 mit angrenzendem Seitenteil (nicht dargestellt) gegeben ist.

Durch den Türausschnitt 1 hindurch ist der in üblicher Weise am Fahrzeugboden angeordnete, in Fahrzeuglängsrichtung verschiebliche Vordersitz 4 zugänglich, der sich aus einem Sitzteil 5, einer Rückenlehne 6 und einer Kopfstütze 7 zusammensetzt.

An der B-Säule 3 und an dem Schweller 2 ist an einem oberen Verankerungspunkt 8 und einem unteren Verankerungspunkt 9 ein 3-Punkt-Sicherheitsgurt 10 angelenkt, der in der Ruhestellung (dargestellt in ausgezogenen Linien) etwa parallel zur B-Säule 3 verläuft. Der untere Verankerungspunkt 9 liegt etwa senkrecht unterhalb des oberen Verankerungspunktes 8 und hält wie ersichtlich ist den Sicherheitsgurt 10 außerhalb des Türausschnittes 1, so dass ein unbehindertes Einsteigen einer Person in den hinter der B-Säule 3 liegenden Fahrzeugfond ermöglicht ist.

Gurtet sich eine auf dem Vordersitz 4 befindliche Person 11 an, so wird dazu die Steckzunge 12 des Sicherheitsgurtes 10 nach vorne unten gezogen und in einen am Sitzteil 5 befindlichen Verankerungspunkt 13 (Gurtschloss) eingeklinkt. Der Sicherheitsgurt 10 (dargestellt in gestrichelten Linien) unterteilt sich jetzt funktionell in einen Schultergurtabschnitt 10a und einen Beckengurtabschnitt 10b.

Der obere Verankerungspunkt 8 des Sicherheitsgurtes 10 ist nur vereinfacht dargestellt; tatsächlich verläuft der Gurt über einen Umlenkbeschlag zu einem in der B-Säule 3 angeordneten Gurtwickler, der zudem mit einem Gurtstraffer für den Schultergurtabschnitt 10a kombiniert ist.

Der untere Verankerungspunkt 9 wird definiert durch einen Gleitbügel 14, der sich in Längsrichtung des Kraftfahrzeuges und etwa horizontal entlang dem Schweller 2 erstreckt und der an seinem vorderen Ende eine nach unten gerichtete Abknickung 14a aufweist. Die Abknickung 14a geht über in einen quer verlaufenden Führungsstift 14b, mittels dem der Gleitbügel 14 an seinem vorderen Ende in einem Führungsschlitz 2a des Schweller nach hinten verlagerbar geführt und gehalten ist.

Ferner weist der Gleitbügel 14 an seinem hinteren Ende einen nach unten abragenden Führungsarm 14c mit einem weiteren Führungsstift 14d auf, der ebenfalls in einem horizontal ausgerichteten Führungsschlitz 2a nach hinten verlagerbar geführt und gehalten ist.

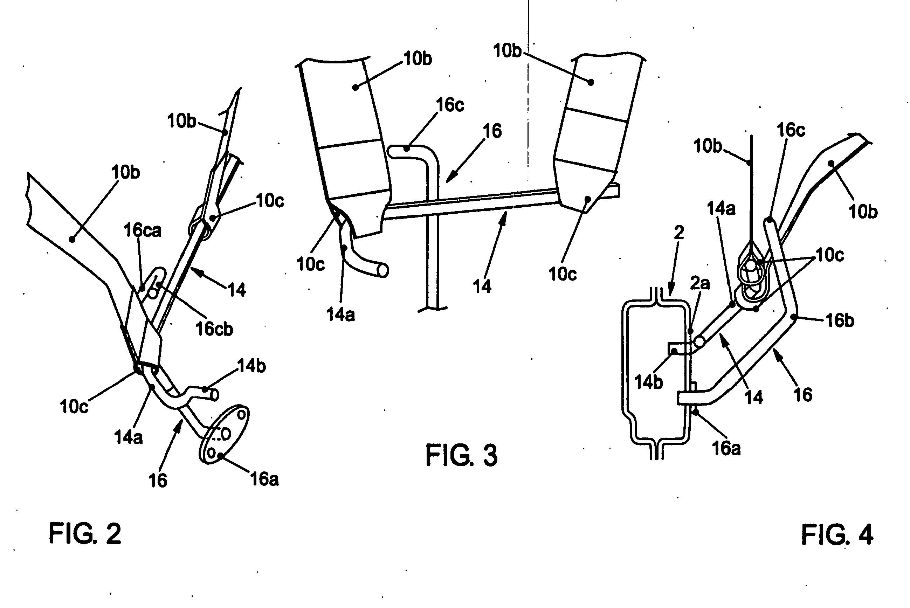

Der Beckengurtabschnitt 10b ist zur Bildung des verschiebbaren Verankerungspunktes 9 mittels einer Halteschlaufe 10c (vgl. Fig. 2 bis 4) auf den Gleitbügel 14 aufgeschoben.

Des weiteren ist der Gleitbügel 14 mit einem Gurtstraffer 15 gekoppelt, der den Gleitbügel 14 in der gezeichneten, vorderen Position hält und der in einem Crashfall pyrotechnisch gezündet den Gleitbügel 14 nach hinten verlagert und damit den Beckengurtabschnitt 10b des Sicherheitsgurtes 10 strammt. Der Gurtstraffer 15 an sich kann handelsüblicher Bauart sein und ist deshalb nicht näher erläutert.

Ferner ist an dem Schweller 2 ein Haltebügel 16 (Fig. 2 bis 4) befestigt, der unterhalb des vorderen Führungsschlitzes 2a mittels einer Basisplatte 16a mit dem Schweller 2 verschraubt ist.

Der Haltebügel 16 verläuft schräg nach innen und oben und geht nach einer Abknickung 16b in ein hakenförmiges Stützteil 16c über, das sich im wesentlichen aus einem quer verlaufenden Abschnitt 16a und einem nach vorne umgelenkten Abschnitt 16cb zusammensetzt (vgl. insbesondere Fig. 2). Das hakenförmige Stützteil 16c ist oberhalb des Gleitbügels 14 positioniert und überragt diesen von innen nach außen; ferner liegt es hinter der den Verankerungspunkt 9 definierender Abknickung 14a. Der Abschnitt 16ca des hakenförmigen Stützteiles 16c entspricht zudem in seiner Länge etwa der Breite des Beckengurtabschnittes 10b. Die Gurtschlaufe 10c liegt dabei wie insbesondere Fig. 3 zeigt unterhalb des hakenförmigen Stützteiles 16c des Haltebügels 16.

Wird von der Ruheposition des Verankerungspunktes 9 der Sicherheitsgurt 10 zum Angurten nach vorne gezogen, so gleitet die Halteschlaufe 10c des Beckengurtabschnittes 10c nach vorne, wobei sie durch die zunächst vertikale Ausrichtung (vgl. Fig. 4) an dem hakenförmigen Stützteil 16c des Haltebügels 16 vorbeigleitet.

Nach dem Erreichen der Betriebsposition, bei der die Halteschlaufe 10c an der Abknickung 14a anliegt, verläuft der Beckengurtabschnitt 10b durch das Ziehen des Beckengurtabschnittes 10b über das Becken der Person 11 nunmehr schräg nach oben innen und in einem definierten seitlichen Anstellwinkel α (Fig. 1), wodurch der Beckengurtabschnitt 10b im Bereich der Halteschlaufe 10c von dem hakenförmigen Stützteil 16c des Haltebügels 16 überdeckt ist und nicht mehr nach hinten zurück gleiten kann.

Der in Fig. 1 eingezeichnete Verankerungspunkt 9 des Beckengurtabschnittes 10b ist somit zwischen der Abknickung 14a des Gleitbügels 14 und dem hakenförmigen Stützteil 16c des Haltebügels 16 definiert.

Wird in einem Crashfall des Kraftfahrzeuges der Gurtstraffer 15 für den Beckengurtabschnitt 10b aktiviert, wobei dieser den Gleitbügel 14 innerhalb der Führungsschlitze 2a relativ zum Schweller 2 bzw. dem Vordersitz 4 nach hinten verlagert, so würde ohne den Haltebügel 16 der Verankerungspunkt 9 nach hinten wandern und u.a. den Gurtanstellwinkel α entsprechend stark verändern.

Durch den beschriebenen Haltebügel 16 mit dem hakenförmigen Stützteil 16c wird jedoch der Beckengurtabschnitt 10b mit der Halteschlaufe 10c bei entsprechender Umlenkung unter dem Stützteil 16c hindurchgezogen und dabei der Beckengurtabschnitt 10b entsprechend angezogen bzw. gestrammt.

Der Verankerungspunkt 9 bzw. der Gurtanstellwinkel α ändert sich dabei nur geringfügig und ist nunmehr durch den Haltebügel 16 definiert.

Soll im regulären Fahrbetrieb der Gurtverankerungspunkt 9 zum erleichterten Einsteigen einer Mitfahrperson in den Fond des Kraftfahrzeuges in die Ruheposition zurückgeführt werden, so ist ggf. der Beckengurtabschnitt 10b aus dem hakenförmigen Stützteil 16c des Haltebügels 16 auszuhängen, sofern dies nicht durch die Gurtlösebewegung automatisch geschieht. Dies kann, wie für den Fachmann ersichtlich ist, durch entsprechende konstruktive Gestaltung des Haltebügels 16 beeinflusst werden. Löst sich der Beckengurtabschnitt 10b nicht automatisch aus dem Haltebügel 16, so bleibt der vordere Gurtverankerungspunkt 9 erhalten, wodurch das Anlegen des Sicherheitsgurtes 10 bei einem erneuten Gurtanlegen erleichtert ist (der Umlenkbeschlag 12 des Sicherheitsgurtes 10 liegt weiter vorne). Der Beckengurtabschnitt 10b muss dann aber zur Einstiegserleichterung für den Fondeinstieg manuell durch Aushängen aus dem Haltebügel 16 zurückgeführt werden.

Die Erfindung ist nicht auf das dargestellte Ausführungsbeispiel beschränkt.

So kann der Haltebügel 16 auch schwenkbar und federnd vorgespannt an dem Schweller 2 angelenkt sein. Der Haltebügel 16 kann dann in einer funktionslosen Stellung durch Federkraft gehalten sein, so dass im regulären Fahrbetrieb nur die Funktion des Gleitbügels 14 mit entsprechender Verstellung des Verankerungspunktes 9 des Beckengurtabschnittes 10b gegeben ist.

In einem Grashfall kann dann der Haltebügel 16 entgegen der Federkraft elektromotorisch oder pyrotechnisch in Funktionslage geschwenkt werden und wie vorbeschrieben wirken.

Die pyrotechnische Betätigung kann in bekannter Weise mittels eines Gasgenerators oder einer Zündpille bewerkstelligt werden.

Bei einer elektromotorischen Betätigung des Haltebügels 16 können zudem mehrere Steuerungsparameter berücksichtigt werden; so kann der Haltebügel 16 dann außer Funktion gesetzt werden, wenn die Rückenlehne 6 des Vordersitzes 4 nach vorne verschwenkt wird, so dass die Einstiegserleichterung durch Zurückfahren des Verankerungspunktes 9 automatisch aktiviert ist. Andernfalls wird sozusagen als Gurtbringerfunktion der Verankerungspunkt 9 durch den Haltebügel 16 auch beim Ablegen des Sicherheitsgurtes 10 in der vorderen Betriebsposition gehalten.

In einer weiteren alternativen Ausführung der Erfindung kann der schwenkbare Haltebügel 16 mechanisch mit dem Gleitbügel 14 derart gekoppelt sein, dass bei einer crashbedingten Verlagerung des Gleitbügels 14 der Haltebügel 16 in die Funktionsstellung durch Federkraft verschwenkt wird.

### Bezugszeichenliste

- 1: Türausschnitt
- 2: Schweller
- 2a: Führungsschlitze
- 3: B-Säule
- 4: Vordersitz
- 5: Sitzteil
- 6: Rückenlehne
- 7: Kopfstütze
- 8: oberer Gurtverankerungspunkt
- 9: unterer Gurtverankerungspunkt
- 10: Sicherheitsgurt
- 10a: Schultergurtabschnitt
- 10b: Beckengurtabschnitt
- 10c: Halteschlaufe
- 11: Person
- 12: Umlenkbeschlag
- 13: Gurtverankerungspunkt
- 14: Gleitbügel
- 14a: Abknickung
- 14b: Führungsstift
- 14c: Führungsarm
- 14d: Führungsstift
- 15: Gurtstraffer
- 16: Haltebügel
- 16a: Basisplatte
- 16b: Abknickung
- 16c: hakenförmiges Stützteil
- 16a: quer verlaufender Abschnitt
- 16cb: nach vorne ausgerichteter Abschnitt

## Patentansprüche

1. Sicherheitsvorrichtung für Kraftfahrzeuge, insbesondere für zweitürige Personenkraftfahrzeuge, mit an den Vordersitzen (4) angeordneten 3-Punkt-Sicherheitsgurten (10) mit einer am Schwellerbereich (2) ausgebildeten Gurtverankerung (9) für einen Beckengurtabschnitt (10b) des Sicherheitsgurts (10), die am vorderen Ende eines in Fahrzeuglängsrichtung ausgerichteten Gleitbügels (14) ausgebildet ist, der im Crashfall mit einem Gurtstraffer (15) nach hinten verlagerbar ist, **dadurch gekennzeichnet, dass** das ein vom Gleitbügel (14) getrennter Haltebügel (16) vorgesehen ist, der bei einer crashbedingten Verlagerung des Gleitbügels (14) am Beckengurtabschnitt (10b) angreift und diesen durch entsprechende Umlenkung in einer vorderen Verankerungsposition hält.

2. Sicherheitsvorrichtung nach Anspruch 1, **dadurch gekennzeichnet, dass** der Haltebügel (16) oberhalb einer Halteschlaufe (10c) des Beckengurtabschnittes (10b) am Gleitbügel (14) den in Fahrzeuglängsrichtung verlaufenden Gleitbügel (14) quert und einen nach vorne ausgerichteten hakenförmigen Abschnitt (16cb) aufweist, der im Crashfall den Beckengurtabschnitt (10b) in der vorderen Verankerungsposition hält.

3. Sicherheitsvorrichtung nach Anspruch 1 oder 2, **dadurch gekennzeichnet, dass** der Haltebügel (16) unterhalb des Gleitbügels (14) am Schweller (2) befestigt oder angelenkt ist.

4. Sicherheitsvorrichtung nach einem der vorhergehenden Ansprüche, **dadurch gekennzeichnet, dass** der Gleitbügel (14) in zumindest einer am Schweller (2) angeordneten Längsführung (2a) geführt ist, und/oder dass an dem den Verankerungspunkt (9) gegenüberliegenden Ende des Gleitbügels (14) der Gurtstraffer (15) angeordnet ist.

5. Sicherheitsvorrichtung nach einem der vorhergehenden Ansprüche, **dadurch gekennzeichnet, dass** der Haltebügel (16) am Schweller (2) befestigt und derart ausgeführt ist, dass der Beckengurtabschnitt (10b) beim Anlegen des Sicherheitsgurtes (10) das hakenförmige Stützteil (16c) des Haltebügels (16) überfahren kann und im angegurteten Zustand von dem Stützteil (16c) gehalten ist.

6. Sicherheitsvorrichtung nach einem der vorhergehenden Ansprüche, **dadurch gekennzeichnet, dass** der Haltebügel (16) schwenkbar am Schweller (2) angelenkt und in einer den Beckengurtabschnitt (10b) nicht beaufschlagenden Position gehalten ist, und dass zumindest im Crashfall der Haltebügel (16) in die Funktionsstellung verlagerbar ist.

7. Sicherheitsvorrichtung nach Anspruch 6, **dadurch gekennzeichnet, dass** der schwenkbare Haltebügel (16) mittels einer pyrotechnischen Einrichtung im Crashfalle in die Funktionsstellung verschwenkbar ist.

8. Sicherheitsvorrichtung nach Anspruch 6, **dadurch gekennzeichnet, dass** der schwenkbare Haltebügel (16) elektromotorisch zumindest in einem Crashfalle in die Funktionsstellung verschwenkbar ist.

9. Sicherheitsvorrichtung nach Anspruch 6, **dadurch gekennzeichnet, dass** der schwenkbare Haltebügel (16) mechanisch mit dem Gleitbügel (14) derart gekoppelt ist, dass bei einer crashbedingten Verlagerung des Gleitbügels (14) der Haltebügel (16) in die Funktionsstellung verschwenkbar ist.

## Claims

1. Safety device for motor vehicles, in particular for two-door passenger motor vehicles, with three-point seat belts (10) which are arranged on the front seats (4) and have a belt anchorage (9), which is formed on the sill region (2), for a lap belt section (10b) of the seat belt (10), the belt anchorage being formed at the front end of a sliding bar (14) which is oriented in the longitudinal direction of the vehicle and, in the event of a crash, can be displaced rearwards by a belt tensioner (15), **characterized in that** a retaining bar (16) which is separate from the sliding bar (14) is provided, said retaining bar, in the event of a crash-induced displacement of the sliding bar (14), acting on the lap belt section (10b) and retaining the latter in a front anchorage position by means of corresponding deflection.

2. Safety device according to Claim 1, **characterized in that** the retaining bar (16) crosses the sliding bar (14), which runs in the longitudinal direction of the vehicle, above a retaining loop (10c) of the lap belt section (10b) on the sliding bar (14) and has a forwardly oriented hook-shaped section (16cb) which, in the event of a crash, retains the lap belt section (10b) in the front anchorage position.

3. Safety device according to Claim 1 or 2, **characterized in that** the retaining bar (16) is fastened or coupled to the sill (2) below the sliding bar (14).

4. Safety device according to one of the preceding claims, **characterized in that** the sliding bar (14) is guided in at least one longitudinal guide (2a) arranged on the sill (2), and/or **in that** the belt tensioner (15) is arranged at that end of the sliding bar (14) which is opposite the anchorage point (9).

5. Safety device according to one of the preceding claims, **characterized in that** the retaining bar (16) is fastened to the sill (2) and is designed in such a manner that, when the seat belt (10) is put on, the lap belt section (10b) can move over the hook-shaped supporting part (16c) of the retaining bar (16) and, in the latched state, is retained by the supporting part (16c).

6. Safety device according to one of the preceding claims, **characterized in that** the retaining bar (16) is coupled pivotably to the sill (2) and is retained in a position not acting upon the lap belt section (10b), and **in that**, at least in the event of a crash, the retaining bar (16) can be displaced into the functional position.

7. Safety device according to Claim 6, **characterized in that** the pivotable retaining bar (16) can be pivoted into the functional position in the event of a crash by means of a pyrotechnic device.

8. Safety device according to Claim 6, **characterized in that** the pivotable retaining bar (16) can be pivoted into the functional position at least in the event of a crash by an electric motor.

9. Safety device according to Claim 6, **characterized in that** the pivotable retaining bar (16) is coupled mechanically to the sliding bar (14) in such a manner that, in the case of a crash-induced displacement of the sliding bar (14), the retaining bar (16) can be pivoted into the functional position.

## Revendications

1. Dispositif de sécurité pour véhicules, en particulier pour véhicules légers à deux portes, comprenant des ceintures de sécurité à 3 points (10) disposées sur les sièges avant (4) avec un ancrage de ceinture de sécurité (9) réalisé au niveau de la région bas de caisse (2) pour une portion de ceinture ventrale (10b) de la ceinture de sécurité (10), qui est réalisé à l'extrémité avant d'un étrier coulissant (14) orienté dans la direction longitudinale du véhicule, qui peut être déplacé vers l'arrière avec un enrouleur de ceinture (15) en cas de collision, **caractérisé en ce qu'**il est prévu un étrier de retenue (16) séparé de l'étrier coulissant (14), lequel vient en prise sur la portion de ceinture ventrale (10b) en cas de déplacement de l'étrier coulissant (14) provoqué par une collision, et retient celui-ci dans une position d'ancrage avant par une déviation correspondante.

2. Dispositif de sécurité pour véhicules selon la revendication 1, **caractérisé en ce que** l'étrier de retenue (16), au-dessus d'une boucle de retenue (10c) de la portion de ceinture ventrale (10b) au niveau de l'étrier coulissant (14), croise l'étrier coulissant (14) s'étendant dans la direction longitudinale du véhicule et présente une portion (16cb) en forme de crochet orientée vers l'avant, qui, en cas de collision, retient la portion de ceinture ventrale (10b) dans la position d'ancrage avant.

3. Dispositif de sécurité pour véhicules selon la revendication 1 ou 2, **caractérisé en ce que** l'étrier de retenue (16) est fixé ou articulé sous l'étrier coulissant (14) au niveau du bas de caisse (2).

4. Dispositif de sécurité pour véhicules selon l'une quelconque des revendications précédentes, **caractérisé en ce que** l'étrier coulissant (14) est guidé dans au moins un guide longitudinal (2a) disposé au niveau du bas de caisse (2), et/ou **en ce que** l'enrouleur de ceinture (15) est disposé au niveau de l'extrémité de l'étrier de ceinture (14) opposée au point d'ancrage (9).

5. Dispositif de sécurité pour véhicules selon l'une quelconque des revendications précédentes, **caractérisé en ce que** l'étrier de retenue (16) est fixé sur le bas de caisse (2) et est réalisé de telle sorte que la portion de ceinture ventrale (10b), lors du bouclage de la ceinture de sécurité (10), puisse passer au-delà de la partie de support en forme de crochet (16c) de l'étrier de retenue (16) et soit retenue dans l'état bouclé par la partie de support (16c).

6. Dispositif de sécurité selon l'une quelconque des revendications précédentes, **caractérisé en ce que** l'étrier de retenue (16) est articulé de manière pivotante sur le bas de caisse (2) et est maintenu dans une position ne sollicitant pas la portion de ceinture ventrale (10b), et **en ce qu'**au moins dans le cas d'une collision, l'étrier de retenue (16) peut être déplacé dans la position fonctionnelle.

7. Dispositif de sécurité selon la revendication 6, **caractérisé en ce que** l'étrier de retenue pivotant (16) peut être pivoté au moyen d'un dispositif pyrotechnique en cas de collision dans la position fonctionnelle.

8. Dispositif de sécurité pour véhicules selon la revendication 6, **caractérisé en ce que** l'étrier de retenue pivotant (16) peut pivoter au moyen d'un moteur électrique au moins dans le cas d'une collision dans la position fonctionnelle.

9. Dispositif de sécurité selon la revendication 6, **caractérisé en ce que** l'étrier de retenue pivotant (16) est accouplé de manière mécanique à l'étrier coulissant (14) de telle sorte que, dans le cas d'un déplacement dé l'étrier coulissant (14) provoqué par une collision, l'étrier de retenue (16) puisse pivoter dans la position fonctionnelle.
